# EUROPÄISCHE PATENTSCHRIFT

(11) **EP 2 630 504 B1**
(45) Veröffentlichungstag und Bekanntmachung des Hinweises auf die Patenterteilung: **17.01.2018**
(21) Anmeldenummer: 11729625.1
(22) Anmeldetag: 04.07.2011
(51) Int. Cl.: G01P 1/00, G01P 1/02, G01D 11/16, G01D 11/24, F16B 2/14, F16B 7/02, F16B 33/00, G01P 3/481, G01P 3/489, G01P 3/486, G01P 15/08

(54) **BEFESTIGUNGSANORDNUNG FÜR EINEN WÄLZLAGERSENSOR**
FASTENING ASSEMBLY FOR A ROLLING BEARING SENSOR
ENSEMBLE DE FIXATION POUR UN CAPTEUR D'UN PALIER À ROULEMENT

(30) Priorität: 22.10.2010 DE 102010049282
(43) Veröffentlichungstag der Anmeldung: 28.08.2013
(73) Patentinhaber: Schaeffler Technologies AG & Co. KG, 91074 Herzogenaurach (DE)
(72) Erfinder: SCHÄFER, Marc-André, 97532 Uechtelhausen (Zell) (DE); HEIM, Jens, 97493 Bergrheinfeld (DE)
(86) Internationale Anmeldenummer: PCT/EP2011/061205
(87) Internationale Veröffentlichungsnummer: WO 2012/052200

(56) Entgegenhaltungen:
- EP-A1- 0 320 566
- WO-A1-2011/012399
- DE-A1-102009 059 904
- US-A- 3 732 494
- US-A- 4 510 408

## Beschreibung

Die Erfindung betrifft eine Befestigungsanordnung für einen Wälzlagersensor mit den Merkmalen des Oberbegriffs von Anspruch 1.

Bei einer Vielzahl von Wälzlageranwendungen ist es notwendig, einen Sensor in einer korrekten Position und Ausrichtung zu einem Signalgeber anzuordnen und anschließend zu befestigen. Insbesondere Drehzahlsensoren, die in Wechselwirkung mit einem Signalgeber, welcher auf einem drehbaren Teil des Wälzlagers befestigt wird, stehen, können nur bei einem bestimmten Detektionsabstand zwischen Sensor und Signalgeber optimal funktionieren.

Beispielsweise werden bei Radlagern im KFZ-Bereich sogenannte Drehzahlsensoren für Anti-Blockiersysteme verwendet, bei denen eine nachträgliche Abweichung vom optimalen Detektionsabstand zu einem Signalverlust führen kann, der die Funktionsweise des Anti-Blockiersystems einschränkt oder sogar unterbindet. Die Drehzahlsensoren basieren meist auf magnetischen Effekten, wie z.B. dem Hall-Effekt, dem magnetorestriktiven Effekt oder Induktion. Eine ähnliche Problematik stellt sich aber auch bei Wälzlagern der Luftfahrtindustrie, wie zum Beispiel Wälzlager für Düsentriebwerke, oder auch bei Wälzlagern für Walzwerke und Papiermaschinen.

Die Befestigung muss einerseits sicher genug sein, um eine nachträgliche Positionsänderung oder eine falsche Befestigung während der Installation des Sensors zu verhindern, andererseits sollte die Befestigung, um den Installationsprozess kosteneffizient zu halten, wenig separate Bestandteile aufweisen und einfach gestaltet sein.

Aus der US 5,640,087 A ist ein Sensor für ein Schrägkugellager mit einer Befestigungsvorrichtung bekannt, bei welcher der Sensor in einem feststehenden Flansch am Achszapfen befestigt wird. Das Gehäuse des Sensors weist ein in radialer Richtung belastbares Federelement mit einer Rastnase auf. Diese Rastnase ist zum Einrasten in einer Nut vorgesehen, die die axiale Position des Sensors festgelegt. Durch das Einschnappen wird erkannt, dass der Sensor an der korrekten Position angeordnet ist. Danach wird ein im Wesentlichen scheibenförmiges Befestigungselement, welches im axialen Formschluss mit dem Sensor steht mittels einer Schraube am feststehenden Flansch befestigt.

Aus der DE 69111879 T5 ist ein Drehzahlsensor für ein Schrägkugellager bekannt, welcher in einem Befestigungsflansch des Radlagers, wobei der Befestigungsflansch einen Teil des feststehenden Achszapfen bildet, angeordnet ist. US 4,510,408 A zeigt eine Vorrichtung zur Anordnung eines Magnetfeldsensors in einer Sensoranordnung zur Erfassung der Drehzahl eines Radlagers. Ein Sensor wird in eine Aufnahme eingesetzt und mit Hilfe eines Konuselementes und einer Klemmschraube in der Aufnahme fixiert. Die Klemmschraube weist eine mittige Öffnung auf, durch welche ein Sensorkabel hindurchgeführt ist. EP 0 320 566 A1 zeigt einen Messfühler zur Erfassung der Umfangsgeschwindigkeit einer Zahnscheibe. Der Messfühler ist auf einer Traghülse befestigt, die ihrerseits mittels einer Befestigungsschraube gegen einen Tragkörper geschraubt ist. Die Traghülse ist als bleibend verformbare Spreizhülse ausgebildet und erlaubt ein axiales Verschieben des Messfühlers, solange die Befestigungsschraube noch nicht festgezogen ist. Bei einem späteren Lösen der Befestigungsschraube verschiebt sich die Traghülse nicht mehr im Gehäuse des Messfühlers.

US 3,732,494 A zeigt einen Sensoradapter zur Anordnung eines Sensors zur Erfassung der Motorgeschwindigkeit. Der Adapter ermöglicht es den Sensor präzise gegenüber seinem Encoder anzuordnen.

Aufgabe der Erfindung ist es, eine verbesserte Befestigungsanordnung für einen Wälzlagersensor zu schaffen, welche eine Befestigung des Wälzlagersensors für eine dauerhafte und zuverlässige Sensierung wälzlagerbezogener Kenngrößen auch unter hohen kinematischen Kräften ermöglicht.

Erfindungsgemäß wird zur Lösung der Aufgabe eine Befestigungsanordnung für einen Wälzlagersensor mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass der Wälzlagersensor mittels einer oder mehrerer Konuselemente in der Aufnahme befestigt ist. Durch die Konuselemente bzw. das Konuselement wird eine sehr einfache, kostengünstige und dauerhafte Befestigung des Wälzlagersensors ermöglicht. Insbesondere müssen weder das Gehäuse des Wälzlagersensors noch die Aufnahme konstruktiv besonders gestaltet werden, da die Befestigung des Wälzlagersensors allein durch Klemmkräfte realisiert ist.

Ferner wird vorgeschlagen, dass das Konuselement durch einen an einer Stelle offenen Klemmring gebildet ist. Die vorgeschlagene Verwendung eines Klemmringes vereinfacht die Montage, da der Klemmring sich während der Monatage selbst in Position hält, wobei es durch die offene Stelle des Klemmringes ermöglicht wird, dass sich der Klemmring während des Verspannens und der Ausführung der dabei bewirkten Axialbewegung je nach der Ausrichtung des Konus zusammenzieht oder aufweiten kann.

Eine konstruktiv besonders einfache und einfach zu spannende Anordnung kann dadurch verwirklicht werden, indem das oder die Konuselemente in einem zwischen der Innenwandung der Aufnahme und dem Gehäuse vorgesehenen Spalt angeordnet ist oder sind.

In diesem Fall wird weiter vorgeschlagen, dass an dem oder an den Konuselementen ein Radialflansch vorgesehen ist, mit dem diese bzw. dieses in einer Anschlagstellung an dem feststehenden Teil des Wälzlagers oder an dem feststehenden an dem Wälzlager angrenzenden Bauteil zur Anlage gelangt. Durch den Radialflansch kann die Spannbewegung der oder des Konuselementes begrenzt werden, so dass die beim Verspannen erzeugte Spannkraft begrenzt wird, und es verhindert wird, dass das oder die Konuselemente oder das Wälzlager bzw. die Aufnahme durch zu hohe Spannkräfte beschädigt werden.

Weiter ist eine Klemmschraube vorgesehen, welche in eine der Aufnahme zugeordnete Gewindebohrung einschraubbar ist, und derart anordenbar ist, dass sie beim Einschrauben in die Gewindebohrung die oder das Konuselement gegenüber der Aufnahme und/oder dem Wälzlagersensor verschiebt. Durch die vorgesehene Klemmschraube kann die zum Verspannen des oder der Konuselemente erforderliche Verschiebebewegung derselben mit konstruktiv einfachen Mitteln verwirklicht werden, wobei die oder das Konuselement dabei besonders gleichmäßig verschoben wird und es verhindert wird, dass das Konuselement während der Verschiebebewegung gegenüber der Aufnahme oder dem Wälzlager verkantet.

Weiter weißt die Klemmschraube eine Öffnung auf, durch die eine elektrische Leitung des Wälzlagersensors hindurchgeführt ist. Dadurch kann eine Art der elektrischen Verbindung des Wälzlagersensor mit einer externen Steuer- oder Auswerteeinheit geschaffen werden, welche die Spannbewegung nicht nachteilig behindert, oder durch diese beschädigt werden kann.

Weiter sind Mittel vorgesehen, mit denen der Wälzlagersensor während des Befestigungsvorganges mit den Konuselementen gegen Verdrehen gesichert werden kann.

Ein besonders einfacher Zugang dieser Mittel zu dem Wälzlagersensor wird dabei dadurch verwirklicht, indem die Mittel die Öffnung in der Klemmschraube von außen durchgreifen können.

Weiter nicht von der Erfindung umfasst wird vorgeschlagen, dass das Mittel durch ein sich an einer Formgestaltung des Gehäuses abstützendes Werkzeug gebildet ist. Die zur Verdrehsicherung des Wälzlagersensors aufzunehmenden Kräfte können dadurch besonders einfach durch das aufgrund seiner Aufgabe bereits formstabil gestaltete Gehäuse aufgenommen werden.

Eine besonders einfache Formgestaltung kann dadurch verwirklicht werden, indem die Formgestaltung durch eine an einem Abschnitt des Gehäuses vorgesehene Schlüsselfläche gebildet ist. Die Schlüsselfläche ermöglicht eine zweiseitige Abstützung des Gehäuses durch ein besonders einfach zu gestaltendes Montagewerkzeug.

Alternativ kann die Formgestaltung durch eine in dem Gehäuse vorgesehene Nut gebildet sein.

Nachfolgend wird die Erfindung anhand mehrerer bevorzugter Ausführungsbeispiele näher erläutert. Es zeigen:
- Fig.1:: Wälzlagersensor mit einer erfindungsgemäßen Befestigungsanordnung und Ausnehmungen zur Aufnahme eine Werkzeugs zur Verdrehsicherung;
- Fig.2:: Wälzlagersensor aus Fig.1 mit eingestecktem Werkzeug zur Verdrehsicherung;
- Fig.3:: Klemmring;
- Fig.4:: Klemmring aus Fig.3 in Schnittrichtung A-A;
- Fig.5a:: nicht erfindungsgemäßer Wälzlagersensor mit einer Schlüsselfläche und aufgestecktem Werkzeug zur Verdrehsicherung;
- Fig.5b:: Schlüsselfläche des Wälzlagersensors in Einzeldarstellung;
- Fig.5c:: Werkzeug aus Fig.5a in Einzeldarstellung
- Fig.6:: Wälzlagersensor mit heraus geführten Stiften zur Verdrehsicherung;
- Fig.7:: Wälzlagersensor aus Fig.6 mit auf die Stifte aufgestecktem Gabelwerkzeug;
- Fig.8:: zylindrischer Wälzlagersensor in einer abschnittsweisen konischen Aufnahme;
- Fig.9:: nicht erfindungsgemäßer Wälzlagersensor mit einer Nut;
- Fig.10:: Wälzlagersensor aus Fig. 9 mit einem in die Nut eingesteckten Werkzeug zur Verdrehsicherung.

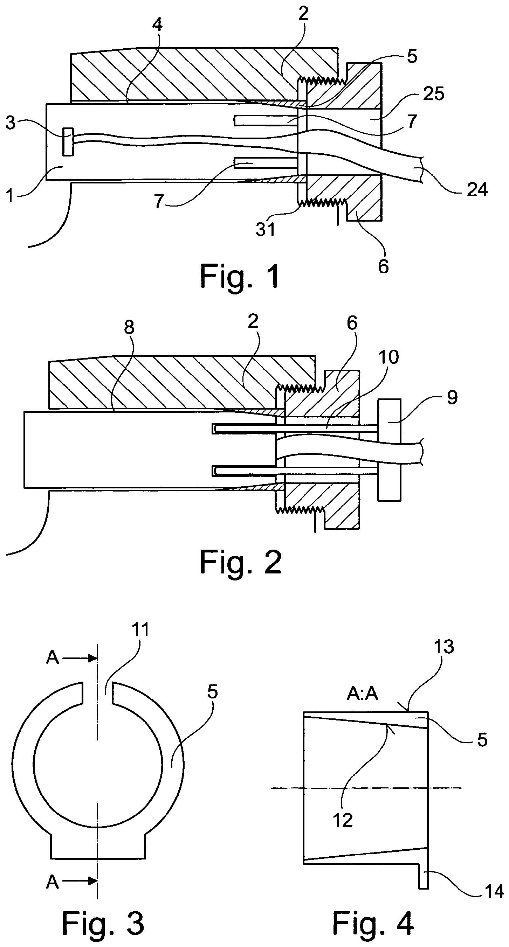

In der Figur 1 ist ein erfindungsgemäß in einer Aufnahme 8 eines feststehenden Teils eines Wälzlagers 2 befestigter Wälzlagersensor 1 zu erkennen, welcher ein formstabiles Gehäuse 4 und einen darin angeordneten Signalaufnehmer 3 aufweist. Die Aufnahme 8 kann auch in einem feststehenden an dem Wälzlager 2 angrenzenden Bauteil wie z.B. einem Achszapfen angeordnet sein, wobei der Wälzlagersensor 1 dann auf ein sich drehendes Teil des Wälzlagers 2 oder auf ein sich drehendes in dem Wälzlager 2 gelagertes Teil gerichtet ist.

Zur Befestigung des Wälzlagersensors 1 in der Aufnahme 8 ist ein Konuselement in Form eines an einer Stelle offenen Klemmringes 5 vorgesehen, welcher in den Figuren 3 und 4 als Einzelteil dargestellt ist. Ferner ist die Aufnahme 8 an einer Seite mit einer Gewindebohrung 31 mit einem größeren Durchmesser versehen, in die eine an dem Klemmring 5 anliegende Klemmschraube 6 eingeschraubt ist. Die Klemmschraube 6 weist eine Öffnung 25 auf, durch die eine elektrisch mit dem Signalaufnehmer 3 verbundene Leitung 24 nach außen heraus geführt ist, und durch die ein Zugang von außen zu in dem Wälzlagersensor 1 vorgesehenen Ausnehmungen 7 ermöglicht ist. Der Klemmring 5 ist an seiner radial äußeren Umfangsfläche 13 zylindrisch und an seiner radial inneren Fläche 12 konisch sich in Richtung der Klemmschraube 6 verjüngend geformt. Ferner ist der Klemmring 5 an seiner der Klemmschraube 6 zugewandten Seite mit einem radial nach außen vorstehenden Radialflansch 14 versehen, welcher die Anlagefläche der Klemmschraube 6 an dem Klemmring 5 vergrößert und die Spannbewegung dadurch begrenzt, indem er zur Anlage an dem feststehenden Teil des Wälzlagers 2 gelangt.

Zur Befestigung des Wälzlagersensors 1 wird zunächst ein Einsteckwerkzeug 9 mit Fingern 10 durch die Öffnung 25 in die Ausnehmungen 7 eingeführt, wie auch in der Figur 2 zu erkennen ist. Anschließend wird die Klemmschraube 6 eingeschraubt, wodurch der Klemmring 5 in den Spalt zwischen der Innenwandung der Aufnahme 8 und der Außenwandung des Gehäuses 4 des Wälzlagersensors 1 eingepresst wird. Da der Wälzlagersensor 1 während dieser Bewegung durch das Einsteckwerkzeug 9 gegen Verdrehen gesichert ist, wird die Ausrichtung des Signalaufnehmers 3 dabei nicht verändert. Nach dem Verspannen des Klemmringes 5 kann das Einsteckwerkzeug 9 anschließend wieder heraus gezogen werden. Das Einsteckwerkzeug 9 bildet in dieser Ausführungsform das Mittel zur Sicherung des Wälzlagersensors 1 gegen Verdrehen.

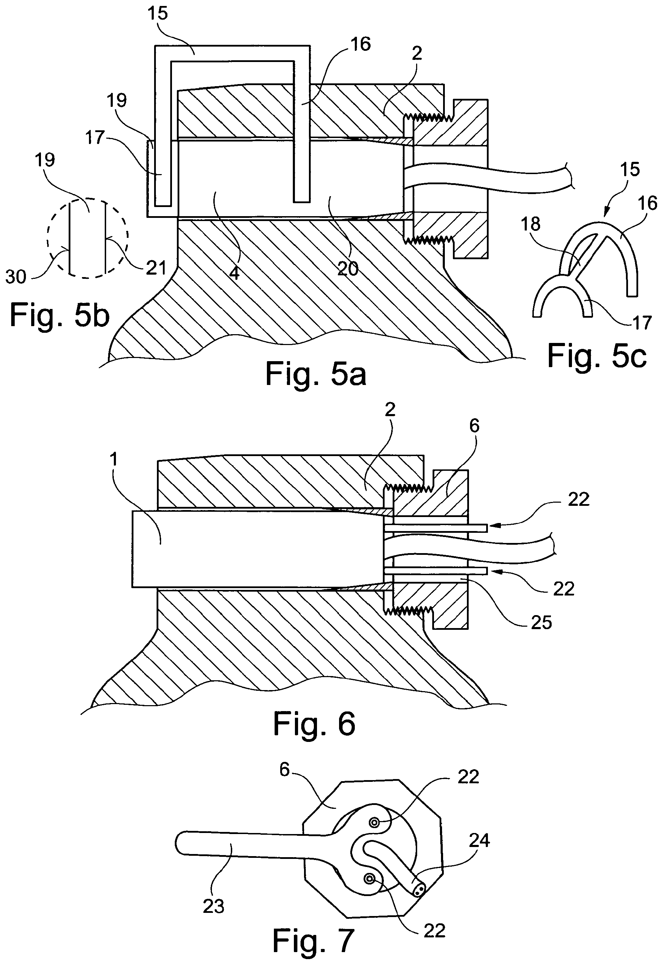

In den Figuren 5a, 5b und 5c ist eine nicht erfindungsgemäße alternative Ausführungsform zu erkennen, bei der das Gehäuse 4 des Wälzlagersensors 1 aus einem ersten Abschnitt 19 mit einer durch zwei gegenüberliegend angeordneten Flachseiten 21 und 30 gebildeten Schlüsselfläche und einem zweiten zylindrischen Abschnitt 20 gebildet ist. Der Wälzlagersensor 1 ist hier mittels eines Montagewerkzeuges 15 bestehend aus zwei über einen Verbindungssteg 18 miteinander verbundenen Armen 16 und 17 gegen Verdrehen gesichert, wobei die Arme 17 in der sichernden Stellung formschlüssig an den Flachseiten 21 und 30 anliegen.

In den Figuren 6 und 7 ist ein weiteres alternatives Ausführungsbeispiel zu erkennen, bei dem an dem Wälzlagersensor 1 zwei durch die Öffnung 25 nach außen ragenden Stifte 22 vorgesehen sind, auf die während des Verdrehens der Klemmschraube 6 ein Gabelwerkzeug 23 zur Sicherung des Wälzlagersensors 1 gegen Verdrehen aufgesteckt ist.

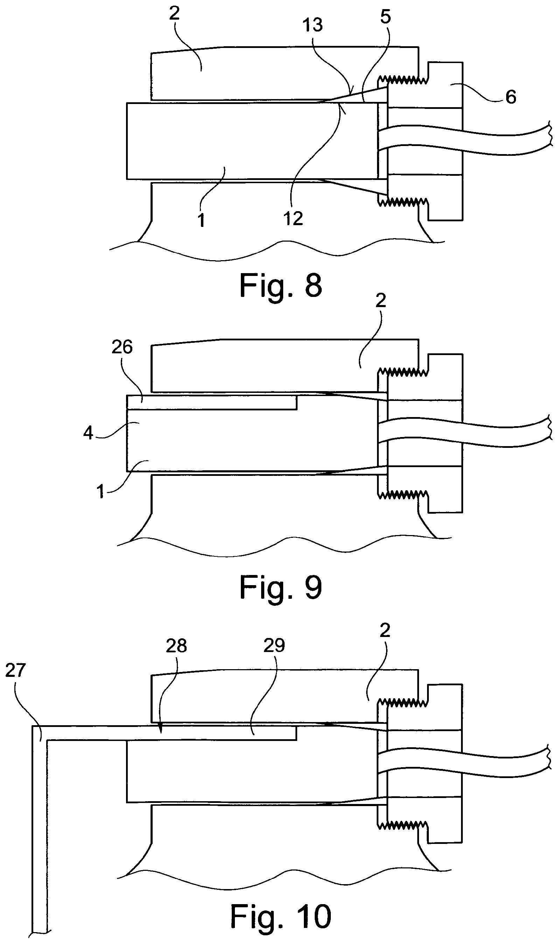

In der Figur 8 ist ein weiteres Ausführungsbeispiel der Erfindung zu erkennen, bei dem die radial äußere Fläche 13 des Klemmringes 15 konisch ausgebildet ist, während die radial innen liegende Fläche 12 zylindrisch ausgebildet ist. Wichtig bei den Ausführungsbeispielen in Figur 8 und der Figur 1 ist es, dass die jeweils gegenüber der konischen Fläche 13 oder 12 des Klemmringes 5 angeordnete Fläche der Ausnehmung 8 oder des Wälzlagersensors 1 ebenfalls entsprechend konisch geformt sind, so dass sich möglichst großflächig aneinander anliegende Klemmflächen zwischen dem Klemmring 5 und der Aufnahme 8 bzw. dem Wälzlagersensor 1 ergeben.

In den Figuren 9 und 10 ist eine weiteres nicht erfindungsgemäßes alternatives Ausführungsbeispiel zu erkennen, bei dem in dem Gehäuse 4 des Wälzlagersensors 1 eine Nut 26 vorgesehen ist, in welche ein fingerförmiges Sicherungsteil 27 einführbar ist, wie in der Figur 10 zu erkennen ist. Nach dem Befestigungsvorgang kann das Sicherungsteil 2 an der Kante 28 abgebrochen werden, so dass ein Teil 29 des Sicherungsteils 27 anschließend in der Nut 26 verbleibt.

In allen Ausführungsbeispielen ist ein besonders wichtiges Merkmal die Öffnung 25 in der Klemmschraube 6, welche es ermöglicht, dass die elektrische Leitung 24 heraus geführt wird, ohne während der Drehbewegung der Klemmschraube 6 bzw. des Befestigungsvorganges und der dadurch bedingten Bewegung der beteiligten Teile belastet zu werden. Ferner kann die Öffnung 25, wie in den Ausführungsbeispiel in den Figuren 1, 2, 6 und 7 zu erkennen ist, zusätzlich als Zugang für die Mittel zur Sicherung des Wälzlagersensors 1 gegen Verdrehen, gebildet durch das Einsteckwerkzeug 9 oder die Stifte 22 mit dem aufgesteckten Gabelwerkzeug 23 genutzt werden.

### Bezugszeichenliste

- 1: Wälzlagersensor
- 2: Wälzlager
- 3: Signalaufnehmer
- 4: Gehäuse
- 5: Klemmring
- 6: Klemmschraube
- 7: Ausnehmungen
- 8: Aufnahme
- 9: Einsteckwerkzeug
- 10: Finger
- 11: Spalt
- 12: Fläche
- 13: Fläche
- 14: Radialflansch
- 15: Montagewerkzeug
- 16: Arm
- 17: Arm
- 18: Verbindungssteg
- 19: Erster Abschnitt
- 20: Zweiter Abschnitt
- 21: Flachseite
- 22: Stifte
- 23: Gabelwerkzeug
- 24: Elektrische Leitung
- 25: Öffnung
- 26: Nut
- 27: Sicherungsteil
- 28: Kante
- 29: Teil
- 30: Flachseite
- 31: Gewindebohrung

## Patentansprüche

1. Befestigungsanordnung umfassend einen Wälzlagersensor (1) mit einem Gehäuse (4) und einem in dem Gehäuse (4) verdrehgesichert angeordnetem Signalaufnehmer (3), welcher mit dem Gehäuse (4) in einer Aufnahme (8) in einem feststehenden Teil eines Wälzlagers (2) oder in einem feststehenden an ein Wälzlager (2) angrenzenden Bauteil anordenbar ist, wobei der Wälzlagersensor (1) mittels einer oder mehrerer Konuselemente in der Aufnahme (8) befestigt werden kann, und wobei eine Klemmschraube (6) vorgesehen ist, welche in eine der Aufnahme (8) zugeordneten Gewindebohrung (31) einschraubbar ist, und derart anordenbar ist, dass sie beim Einschrauben in die Gewindebohrung (31) die oder das Konuselement gegenüber der Aufnahme (8) und/oder dem Wälzlagersensor (1) verschiebt, wobei die Klemmschraube (6) ein Öffnung (25) aufweist, durch die eine elektrische Leitung (24) des Wälzlagersensors (1) hindurchgeführt ist, **dadurch gekennzeichnet, dass** Mittel vorgesehen sind, mit denen der Wälzlagersensor (1) während des Befestigungsvorgangs mit dem oder den Konuselementen gegen Verdrehen gesichert werden kann, und dass die Mittel die Öffnung (25) in der Klemmschraube (6) von außen durchgreifen können.

2. Befestigungsanordnung nach Anspruch 1, **dadurch gekennzeichnet, dass** das Konuselement durch einen an einer Stelle offenen Klemmring (5) gebildet ist.

3. Befestigungsanordnung nach einem der vorangegangenen Ansprüche, **dadurch gekennzeichnet, dass** das oder die Konuselemente in einem zwischen der Innenwandung der Aufnahme (8) und dem Gehäuse (4) vorgesehenen Spalt angeordnet ist oder sind.

4. Befestigungsanordnung nach Anspruch 3, **dadurch gekennzeichnet, dass** an dem oder an den Konuselementen ein Radialflansch (14) vorgesehen ist, mit dem diese bzw. dieses in einer Anschlagstellung an dem feststehenden Teil des Wälzlagers (2) oder an dem feststehenden an dem Wälzlager (2) angrenzenden Bauteil zu Anlage gelangt.

## Claims

1. Fastening arrangement comprising an anti-friction bearing sensor (1) with a housing (4) and a signal pick-up (3) which is arranged such that it is secured against rotation in the housing (4) and can be arranged with the housing (4) in a receptacle (8) in a stationary part of an anti-friction bearing (2) or in a stationary component which adjoins an anti-friction bearing (2), it being possible for the anti-friction bearing sensor (1) to be fastened in the receptacle (8) by means of one or more cone elements, and a clamping screw (6) being provided which can be screwed into a threaded bore (31) which is assigned to the receptacle (8), which clamping screw (6) can be arranged in such a way that, during screwing into the threaded bore (31), it displaces the cone element or the cone elements with respect to the receptacle (8) and/or the anti-friction bearing sensor (1), the clamping screw (6) having an opening (25), through which an electric line (24) of the anti-friction bearing sensor (1) is guided, **characterized in that** means are provided, by way of which the anti-friction bearing sensor (1) can be secured against rotation during the fastening operation to the cone element or the cone elements, and **in that** the means can reach through the opening (25) in the clamping screw (6) from the outside.

2. Fastening arrangement according to Claim 1, **characterized in that** the cone element is formed by way of a clamping ring (5) which is open at one point.

3. Fastening arrangement according to either of the preceding claims, **characterized in that** the cone element or the cone elements is/are arranged in a gap which is provided between the inner wall of the receptacle (8) and the housing (4).

4. Fastening arrangement according to Claim 3, **characterized in that** a radial flange (14) is provided on the cone element or on the cone elements, by way of which radial flange (14) the said cone elements or the said cone element pass/passes into contact in a stop position with the stationary part of the anti-friction bearing (2) or with the stationary component which adjoins the anti-friction bearing (2).

## Revendications

1. Ensemble de fixation comprenant un capteur (1) de palier de roulement doté d'un boîtier (4) et d'un enregistreur (3) de signaux disposé dans le boîtier (4) de manière à ne pas pouvoir tourner et pouvant placé avec le boîtier (4) dans un logement (8) d'une partie fixe d'un palier de roulement (2) ou dans un composant fixe adjacent au palier de roulement (2),
le capteur (1) de palier de roulement pouvant être fixé dans le logement (8) au moyen d'un ou plusieurs éléments coniques,
une vis de serrage (6) qui peut être vissée dans un alésage fileté (31) associé au logement (8) étant prévue et pouvant être placée de telle sorte que lorsqu'elle est vissée dans l'alésage fileté (31), elle déplace le ou les éléments coniques par rapport au logement (8) et/ou au capteur (1) de palier de rotation, la vis de serrage (6) présentant une ouverture (25) par laquelle un conducteur électrique (24) du capteur (1) de palier de roulement est passé, **caractérisé en ce que**
des moyens sont prévus pour permettre de bloquer en rotation le capteur (1) de palier de roulement pendant l'opération de fixation à l'aide du ou des éléments coniques et
**en ce que** les moyens peuvent traverser de l'extérieur l'ouverture (25) ménagée dans la vis de serrage (6).

2. Ensemble de fixation selon la revendication 1, **caractérisé en ce que** l'élément conique est formé d'une bague de serrage (5) ouverte en un emplacement.

3. Ensemble de fixation selon l'une des revendications précédentes, **caractérisé en ce que** le ou les éléments coniques sont disposés dans un interstice prévu entre la paroi intérieure du logement (8) et le boîtier (4).

4. Ensemble de fixation selon la revendication 3, **caractérisé en ce que** sur le ou les éléments coniques est prévue une bride radiale (14) par laquelle ce ou ces éléments coniques viennent se placer dans une position de butée sur la partie fixe du palier de roulement (2) ou sur le composant fixe adjacent au palier de roulement (2).
